# EUROPEAN PATENT SPECIFICATION

(11) **EP 3 052 779 B1**
(45) Date of publication and mention of the grant of the patent: **06.11.2019**
(21) Application number: 14784395.7
(22) Date of filing: 30.09.2014
(51) Int. Cl.: F01P 11/02, F16K 17/196

(54) **VALVE, ASSEMBLY FOR DEGASSING A COOLANT, AND METHOD FOR DEGASSING THE COOLANT**
VENTIL, ANORDNUNG ZUR ENTGASUNG EINES KÜHLMITTELS UND VERFAHREN ZUM ENTGASEN DES KÜHLMITTELS
SOUPAPE, ENSEMBLE POUR DÉGAZAGE D'UN FLUIDE FRIGORIGÈNE ET PROCÉDÉ DE DÉGAZAGE DU FLUIDE FRIGORIGÈNE

(30) Priority: 01.10.2013 FR 1359504
(43) Date of publication of application: 10.08.2016
(73) Proprietor: Illinois Tool Works Inc., Glenview, IL 60025 (US)
(72) Inventor: IAFRATE, Serge, F-01090 Montmerle Sur Saone (FR); DUMAS, Pascal, F-71250 Cluny (FR)
(74) Representative: HGF Limited
(86) International application number: PCT/US2014/058152
(87) International publication number: WO 2015/050830

(56) References cited:
- EP-A2- 0 360 252
- DE-A1-102011 078 293
- US-A1- 2005 082 289

## Description

The invention relates to a cooling circuit valve, suitable for being positioned on a degassing tank intended to receive a refrigerant, in particular a coolant for the cooling circuit of a heat engine. The invention also relates to an assembly for degassing a refrigerant, comprising such a valve and such a tank, as well as a method for degassing the refrigerant.

In the field of cooling systems for heat engines, the temperature conditions to which the coolant, such as water/glycol mixtures, is subjected cause vapors to form within the cooling circuit. To eliminate this boiling, the cooling system is pressurized using an adjustable valve.

In order to comply with current environmental regulations, engine heating time tends to decrease. To that end, the thermal inertia of the engine upon start-up thereof should be decreased. However, in certain specific vehicles, the cooling circuit may include more than 5 liters of liquid, which considerably increases the thermal inertia of the engine.

A first solution consists of cutting all circulation of the coolant in the circuit when the engine is started up. This function is performed by a thermostat that regulates the circulation of the liquid as a function of the temperature of the engine.

A second solution consists of acting directly on the water pump responsible for setting the coolant in motion within the circuit. The water pump is disconnected mechanically or electrically, so as to block the circulation of the liquid upon start-up, and once the heat balance is achieved, to allow the coolant to circulate in the circuit.

Another alternative is to cut the circulation of the coolant in the circuit using controlled gates.

In the cooling circuit of a heat engine, it is common for the degassing tank to be supplied with coolant directly with no cutoff member such as a gate or thermostat, for example in the case of engine head degassing. Thus, another approach is to cut the circulation of the coolant inside the degassing tank, as long as the internal temperature has not reached a value close to the regulation temperature. This cutoff may be done using a gate controlled either by the internal temperature of the tank, in particular by thermostatic elements, or by the internal pressure of the tank. This gate is generally positioned outside the degassing tank. This has the drawback that the factory filling of a coolant circuit is more difficult and requires using a bypass system.

To overcome this problem, DE-A-10 2011 078293 teaches to fit the cutoff gate inside the degassing tank. This cutoff gate includes a non-return valve comprising a body movable relative to a seat. This body is lifted up against the elastic effort of a spring when the tank pressure exceeds a first threshold value. As a result, the refrigerant circulation inside the tank is cut as long as the tank pressure is below the first threshold value. The degassing tank is also equipped with an overpressure flap and with an air intake flap. The cutoff gate body is rigid, thereby inducing abrupt opening and closing of the gate.

The invention aims to resolve the aforementioned drawbacks, by proposing an improved valve for a cooling circuit.

To that end, the invention relates to a cooling circuit valve, suitable for being positioned on a degassing tank intended to receive a refrigerant, in particular a coolant for a heat engine, said valve comprising at least one first refrigerant supply duct, a second air intake duct inside the valve, a third refrigerant and/or air exhaust duct, in particular an exhaust for coolant or a gas formed by vaporization of that coolant, a connecting volume that is in communication with an inner volume of the degassing tank when the valve is positioned on the degassing tank, a flap selectively opening a passage for an incoming stream of air going from the second duct toward the connecting volume, a flap for selectively opening a passage for an outgoing stream of refrigerant and/or air, going from the connecting volume toward the third duct, and, a regulator which, under the effect of the pressure in the connecting volume, selectively opens a passage of an incoming refrigerant stream going from the first duct toward the connecting volume. According to the invention, the regulator comprises a a membrane that is elastically deformable under the effect of the pressure in the connecting volume. Also, the regulator comprises a seat and a housing between which the membrane is fixed by both of its edges.

Owing to the invention, the regulator is opened and closed more smoothly thanks to the elastic membrane. The gas leaks are then reduced and the tank pressure is better controlled. According to advantageous but non-mandatory aspects of the invention, the valve may incorporate one or more of the following features, considered in any technically allowable combination:
- The membrane comprises a first part positioned across from the first duct and which seals the first duct when the regulator is closed, a second part that partially delimits the connecting volume, and a third part that connects the first part and the second part and which bears against the seat when the regulator is closed.
- The second part of the membrane is capable of lifting, under the effect of the pressure in the connecting volume, the first and third parts of the membrane toward the housing, thereby opening the passage for the incoming refrigerant stream between the seat and the membrane.

- The regulator comprises means for elastically loading the membrane, which include a calibration spring and a blade bearing on the third part of the membrane, the spring being inserted between the blade and the housing.
- A contact surface between the third part of the membrane and the seat is parallel to the incoming refrigerant stream.
- The third part of the membrane includes ribs that bear against the seat when the regulator is closed.
- The ribs have contact surfaces with the seat that are annular and concentric relative to a central axis of the valve.

The invention also relates to a degassing assembly for a refrigerant, comprising a valve and a degassing tank intended to receive a refrigerant, the valve being as previously defined and fixed in the upper part of the degassing tank in a recess provided to that end.

The invention thus relates to a method for degassing a refrigerant inside a degassing tank. According to the invention, this method uses a valve as previously described and comprises steps in which:
a) when a vacuum occurs in the connecting volume, i.e., when the internal pressure of the tank drops below the atmospheric pressure, air is suctioned into the second duct and the flap opening the passage for the incoming stream of air opens,
b) when the pressure inside the tank reaches atmospheric pressure, the flap opening the incoming air stream passage closes,
c) when the pressure of the tank reaches a reference value, which is greater than the atmospheric pressure, the opening regulator of the passage for the incoming refrigerant stream opens, and
d) when the pressure in the tank reaches an overpressure value, which is greater than the reference value, the flap opening a passage for the outgoing stream opens, thereby allowing the refrigerant and/or air to escape.

The invention will be better understood and other advantages thereof will appear more clearly in light of the following description of one embodiment of a valve according to its principle, provided solely as a non-limiting example and done in reference to the appended drawings, in which:
- figure 1 is a cross-section of a degassing assembly according to the invention, comprising a degassing tank and a valve that is also according to the invention,
- figure 2 is an enlarged view of detail II of figure 1,
- figure 3 is an enlarged view of detail III of figure 2,
- figure 4 is a cross-section similar to figure 2, showing the valve in case of vacuum in the degassing tank,
- figure 5 is an enlarged view of detail V of figure 4,
- figure 6 is a cross-section similar to figures 2 and 4, showing the valve in a configuration where the internal circulation of the refrigerant is open,
- figure 7 is an enlarged view of detail VII of figure 6,
- figure 8 is a cross-section similar to figures 2, 4 and 6, showing the valve in case of overpressure in the degassing tank,
- figure 9 is an enlarged view of detail IX of figure 8,
- figure 10 is a cross-section similar to figures 2, 4, 6 and 8, showing the valve in case of filling of the cooling circuit or in case of bypass, i.e., in a configuration where the circulation of the refrigerant is continuous, independently of the internal pressure, and
- figure 11 is an enlarged view of detail IX of figure 10.

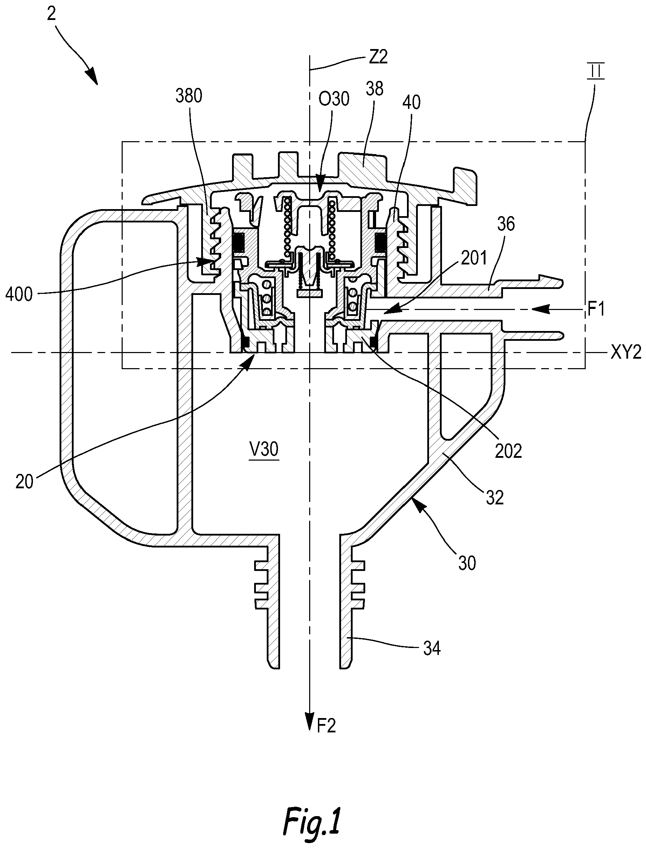

Figures 1 to 11 show a degassing assembly 2 according to the invention. In this example, this degassing assembly 2 is intended to be integrated into the cooling circuit of a heat engine.

This degassing assembly 2 comprises a tank 30 and a valve 20 assembled on the tank 30.

The tank 30 comprises an outer body 32 that delimits an inner volume V30 of the tank 30. In its upper part, the outer body 32 comprises a neck 40 that delimits an inner orifice O30 and which includes an outer thread 400. The orifice O30 forms a recess for receiving the valve 20 in the upper part of the tank 30. The tank 30 also comprises a stopper 38 including a tapping 380. The tapping 380 of the stopper 38 has a screw pitch complementary to the screw pitch of the thread 400 of the neck 40. Thus, the stopper 38 can be screwed in the neck 40, which makes it possible to close the tank 30 in the upper part thereof. The stopper 38 therefore makes it possible to shut the valve 20 inside the tank 30, in the recess O30. The outer body 32 of the tank 30 also comprises, in the upper part, several refrigerant inlet connectors 36, and its lower part, an outlet connector 34 for the same refrigerant. In practice, the tank 30 generally includes one or two inlet connectors 36. Only one of these connectors is shown in figure 1, having specified that any other connectors are situated in planes other than that of this figure.

In the example, the refrigerant is a coolant, in particular a water/glycol mixture. Alternatively, the refrigerant may be of any type suitable for the present application.

To facilitate the spatial identification of the different parts of the assembly 2, an axis Z2 is defined, which is vertical when the wheels of the vehicle equipped with the assembly 2 rest on a horizontal ground. Hereafter, the terms "bottom" and "lower" correspond to an orientation toward the ground, while the terms "top" and "upper" correspond to an orientation opposite the ground. The coolant flows from the valve 20 toward the inside of the tank 30 generally along that vertical axis Z2. The connector 34 extends parallel to the vertical axis Z2, while the connectors 36 extend radially to the axis Z2. Also defined are an incoming stream F1 of coolant in the valve 20 via the inlet connectors 36 and an outgoing stream F2 of coolant toward the outside of the tank 30 via the outlet connector 34. The coolant flows downward by simple gravitational effect.

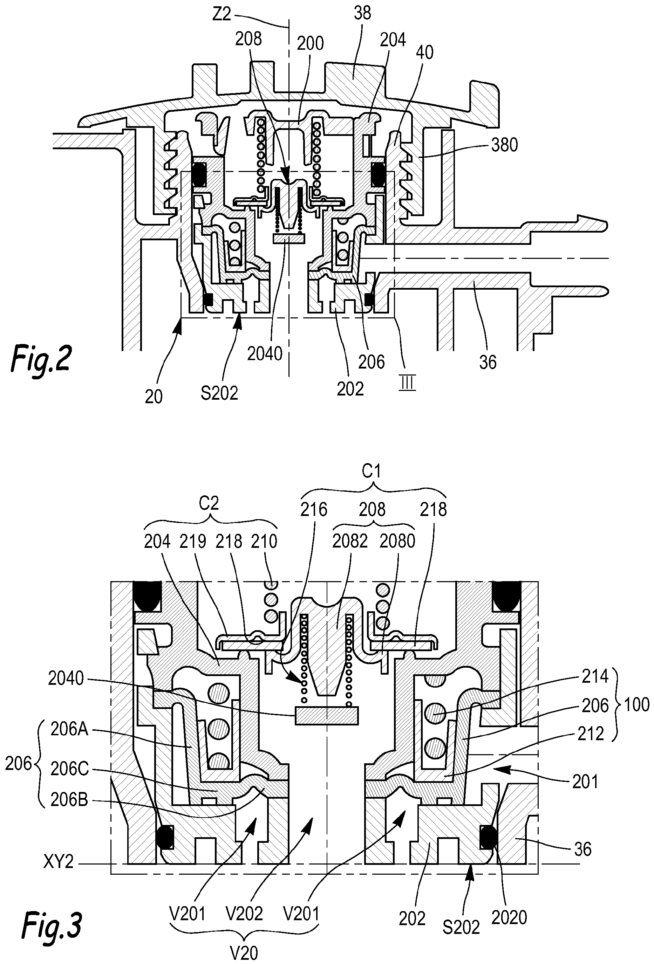

Figures 2 to 11 show the valve 20 according to the invention in more detail.

The valve 20 comprises a housing 204 and a seat 202 that are positioned inside the neck 40 and that are hollow parts made from a synthetic material and symmetrical in revolution around the axis Z2. The seat 202 is positioned below the housing 204 and defines a lower surface S202.

In the present description, the term "duct" refers to a passage volume for a fluid, whereas a "connector" refers to the structure surrounding that volume.

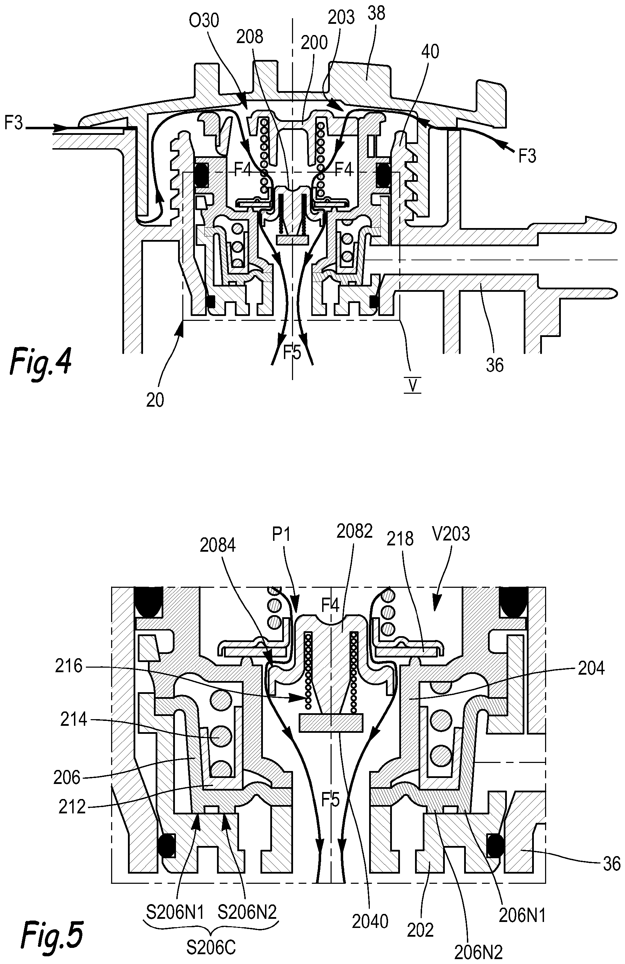

At the center of the valve 20, i.e., inside the housing 204, a single-piece member 208 is positioned comprising a main body 2082 and a cap 2080. The member 208 is a part of revolution centered on the axis Z2. The cap 2080 includes an edge 2084 curved upward, with a substantially annular profile centered on the axis Z2. The edge 2084 is better visible in figure 5. A part 2040 belonging to the housing 204 is positioned below the member 208. A spiral spring 216 that surrounds the axis Z2 is inserted between this part 2040 and the member 208. In the configuration of figure 2, the edge 2084 of the cap 2080 bears upward against a seal 218 surrounding the main body 2082 of the member 208. The seal 218 is hollow, positioned inside the housing 204 and with symmetry of revolution around the axis Z2. The spring 216 exerts an upward elastic force on the member 208, which pushes that member 208 against the seal 218.

An abutment part 200 is positioned above the member 208. A spiral spring 210 surrounds the axis Z2 and is inserted between the abutment part 200 and the seal 218. More specifically, the spring 210 is inserted between the abutment part 200 and a bearing blade 219 of the spring 210 on the seal 218. The spring 210 therefore constitutes means for elastically loading the seal 218 downward, i.e., against the housing 204.

The valve 20 comprises several ducts 201 for supplying the valve with coolant, only one of which is shown in the figures. The ducts 201 extend the connectors 36 of the outer body 32 of the tank 30; they represent the outlet of the connectors 36 in the valve 20. The ducts 201 each emerge on a regulator 100 included in the valve 20.

Positioned between the seat 202 and the neck 40 of the tank 30 is a sealing device 2220 making it possible to prevent the passage of the coolant outside the duct 201.

The regulator 100 comprises an elastically deformable membrane 206, a bearing blade 212 and a calibration spring 214. The membrane 206 is a part of revolution around the axis Z2 whereof the section considered in a plane containing the axis Z2 is generally L-shaped. The membrane 206 therefore comprises an upper edge 206D and a lower edge 206E. The edges 206D and 206E are fixed between the housing 204 and the seat 202.

As shown in figures 1 and 3, a plane XY2 is defined perpendicular to the axis Z2 and delimits the valve 20. This plane XY2 is positioned at the lower end of the valve 20. It is therefore tangent to the surface S202 of the seat 202. It is considered that the volume located below the plane XY2 forms the inner volume V30 of the tank 30 and that the volume located above the plane XY2 forms a connecting volume V20 connecting the valve 20 with the inner volume V30 of the tank 30. More specifically, the volume V20 is shown in figure 3. It comprises a first volume V201 delimited between the membrane 206 and the plane XY2 and a second volume V202 defined between the member 208 and the plane XY2 inside the seat 202 and the housing 204. The plane XY2 marks the separation between the valve 20 and the tank 30, and it is therefore possible to deduce therefrom that the volume V20 forms the connection between the valve 20 and the tank 30.

The membrane 206 is made up of three parts 206A, 206B and 206C. The first part 206A defines the upper edge 206D, it is oriented toward the coolant supply duct 201, and it seals the duct 201 when the regulator 100 is closed. The second part 206B partially defines the connecting volume V20 of the valve 20 and defines the lower edge 206E. The third part 206C connects the first part 206A and the second part 206B to each other. The third part 206C may be described as a middle part of the membrane 206, framed by the parts 206A and 206B. The third part 206C bears against the seat 202 when the regulator 100 is closed, i.e., the third part 206C extends parallel to the duct 201 in which the membrane 206 is positioned and therefore parallel to the incoming stream F1 of coolant. This arrangement prevents coolant from infiltrating from the duct 201 toward the inside of the valve 20 when the regulator 100 is closed. Furthermore, the membrane includes two ribs 206N1 and 206N2 that are positioned at the third part 206C and that bear against the seat 202 when the regulator 100 is closed. The ribs 206N1 and 206N2 have an annular shape centered on the axis Z2 and have an outer surface, i.e., oriented toward the seat 202, respectively denoted S206N1 and S206N2. The surfaces S206N1 and S206N2 are concentric surfaces relative to a point of the axis Z2 and together form a contact surface S206C of the membrane 206 with the seat 202. Having a double bearing surface makes it possible to have double sealing at the contact between the membrane 206 and the seat 202.

The bearing blade 212 and the calibration spring 214 are positioned above the third part 206C of the membrane 206. The spring 214 is inserted between the housing 204 and the blade 212 and therefore provides an elastic force that tends to press the third part 206C of the membrane 206 downward against the seat 202. This elastic loading elastic force makes it possible to keep the regulator 100 in the closed position.

As better shown in figures 4 and 5, the valve 20 also comprises, in the upper part, an air suction duct 203, i.e., a passage in which air is suctioned. The suction duct 203 passes between the neck 40 and the stopper 38 of the tank 30 and emerges on a volume V203 situated above the member 208.

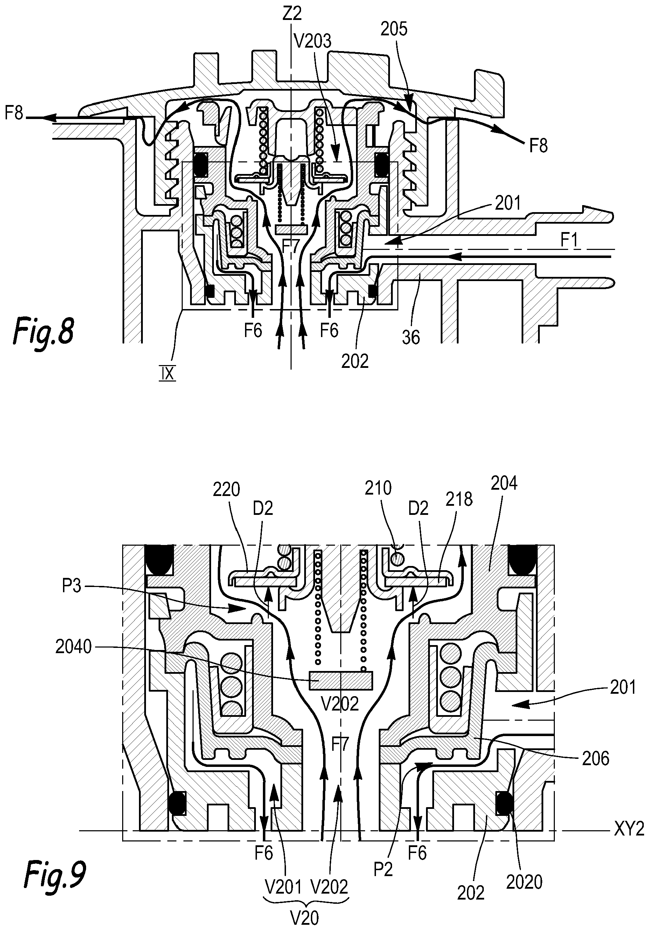

In case of overpressure, the valve 20 must secure the cooling circuit. To that end, the valve 20 comprises a passage, or exhaust duct 205, for the coolant, then in liquid or gaseous phase, and/or air. In other words, the duct 205 is a refrigerant and/or air exhaust duct, in particular exhaust for coolant or a gas resulting from vaporization of the coolant. This duct 205 is better shown in figures 8 and 9 and is identical to the duct 203, with the exception that the circulation direction of the fluid is not the same.

The coolant supply ducts 201 form first ducts within the valve 20, the air intake duct 203 is a second duct and the refrigerant and/or air exhaust duct 205 is a third duct.

Figures 4 to 9 show the different states of the valve 20 depending on the inner pressure of the degassing tank 30, i.e., the pressure of the connecting volume V20. This inner pressure of the tank depends on the heat balance of the engine.

As shown in figures 4 and 5, the first step of the method occurs in case of a vacuum inside the tank 30, that vacuum being related to the heat balance of the engine. Thus, air is suctioned into the air intake duct 203 provided to that end. The air therefore travels between the neck 40 and the stopper 38, as shown by the arrows F3, and enters the volume V203. The increase in the pressure of the air in the volume V203 pushes the member 208 downward against the action of the spring 216. This movement makes it possible to free a passage P1 between the cap 2080 of the member 208 and the seal 218. The air therefore flows, in the direction of the arrows F4, in that passage P1 going from the second duct 203 toward the volume V202 belonging to the connecting volume V20. The spring 216, the member 208 and the seal 218 therefore form a first flap C1 for selectively opening the passage P1 for the incoming air stream F3.

At the outlet of the flap C1, the air flows, in the direction of the arrows F5, into the volume V201, then into the inner volume V30 of the tank 30. As a result, the pressure inside the tank 30 is increased.

When the pressure in the connecting volume V20 reaches the outside pressure, or atmospheric pressure, the air ceases to be suctioned through the second duct 203, since pressure equilibrium has been achieved. If no pressure is exerted on the upper part of the member 208, the action of the elastic spring 216 moves the member 208 upward. This movement means that the edges 2084 of the cap 2080 come into contact with the seal 218, thereby closing the passage P1 for the air.

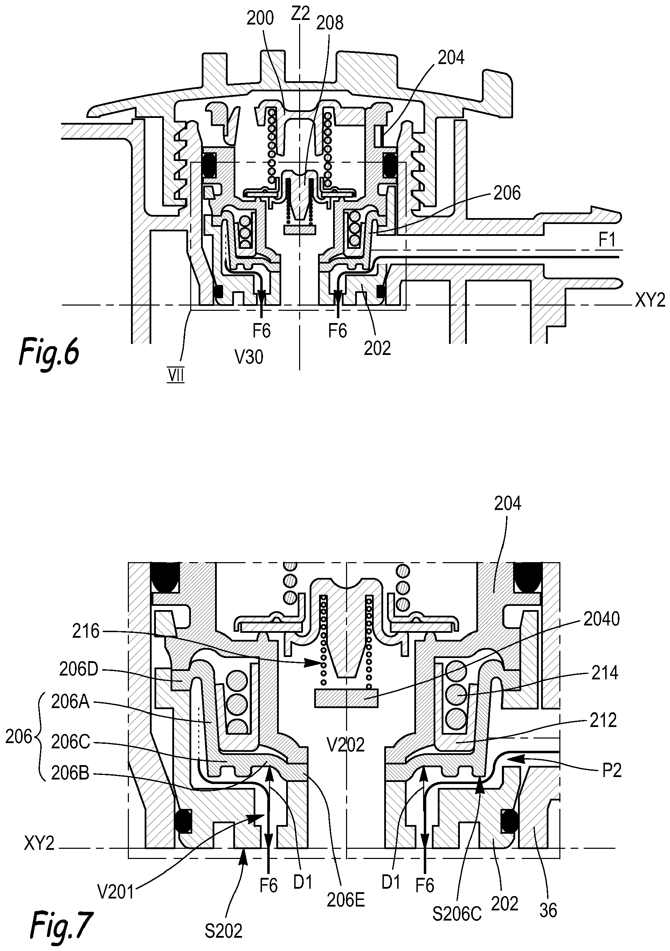

When the pressure in the volume V20 reaches a reference pressure, for example comprised between 0.6 and 0.7 relative bar, the regulator 100 opens. More specifically, the elastic loading means formed by the calibration spring 214 and the bearing blade 212 of the regulator 100 do not oppose sufficient resistance against the pressure of the volume V201. The pressure prevailing in the volume V201 of the connecting volume V20 then lifts the first part 206A and the third part 206C of the membrane 206 upward. This movement is shown in figure 7 by the arrows D1. The coolant can therefore flow into a passage P2 between the third part 206C of the membrane 206 and the seat 202. The passage P2 goes from the first duct 201 to the first volume V201 belonging to the connecting volume V20. The regulator 100 is therefore a regulator for selectively opening the passage P2 for the incoming stream F1. The coolant is poured at the output of the regulator 100 into the tank 30, as shown by the arrows F6.

Thus, the valve 20 makes it possible to pressurize the cooling circuit to prevent any vaporization of the coolant during normal operation.

When the pressure inside the tank 30 reaches an overpressure value, for example equal to 1.4 relative bar, the pressure of the connecting volume V20 of the valve 20 causes a movement of the assembly formed by the member 208 and the seal 218 upward against the action of the elastic force of the spring 210. This pressure force is shown, in figure 9, by the arrows D2. A passage P3 therefore opens between the seal 218 and the housing 204. The seal 218, the blade 219, the spring 210 and the housing 204 therefore form a second flap C2 for selectively opening the passage P3. When the flap C2 is open, the air and/or coolant escapes through the passage P3 upward, as shown by the arrows F7.

The gas next escapes between the neck 40 and the stopper 38. This movement is shown in figure 8 by arrows F8. The flap C2 is therefore a flap for selectively opening the passage P3 for the outgoing stream F7 of gas and/or coolant. This opening configuration of the flap C2, aiming to discharge the exhaust gases, occurs only in case of a "heat wave", or overheating of the engine, this overheating in practice coming from an internal anomaly.

This discharge of the gas causes a pressure drop within the tank 30. When the pressure decreases below the overpressure value, for example equal to 1.4 relative bar, the pressure prevailing inside the tank 30 is not sufficient to compensate the elastic return of the spring 210. Thus, the seal 218 returns bearing downward against the housing 204. The flap C2 is closed.

In parallel, the regulator 100 for selective opening of the passage P2 for the incoming stream F1 of coolant closes, as the pressure exerted on the second part 206B of the membrane 206 is not sufficient to compensate the elastic return of the spring 214. The third part 206C of the membrane 206 therefore returns, bearing against the seat 202, thereby closing the passage P2.

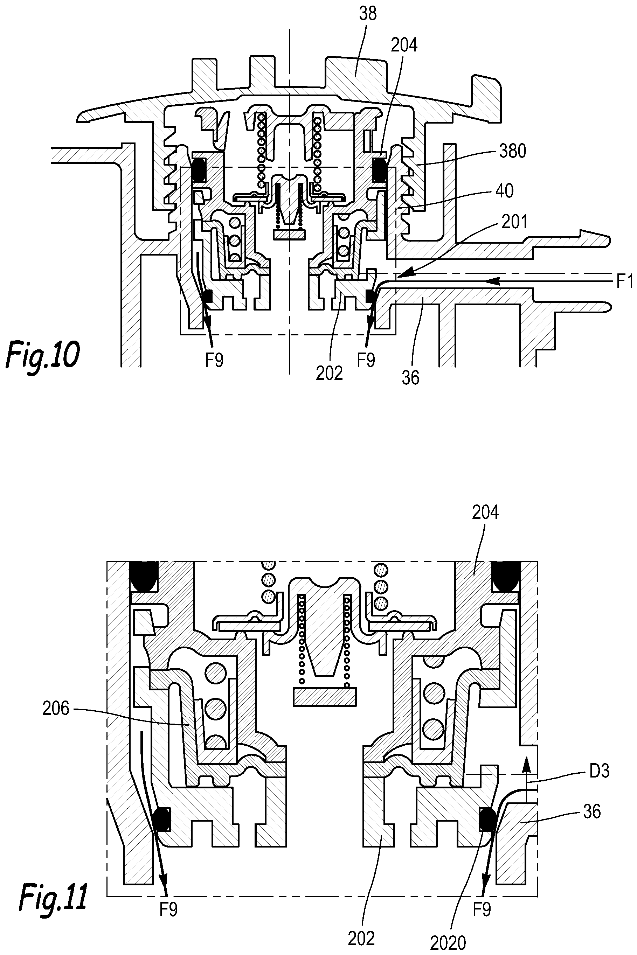

Figures 10 and 11 show a configuration for manual opening of the coolant supply duct 201. This configuration is obtained by unscrewing the stopper 38 from the neck 40. This unscrewing causes the valve 20 to move upward. Consequently, the sealing device 2020 of the seat 200 no longer bears sealably against the outer body 32 of the tank 30. There is therefore a passage of coolant between the seat 202 and the neck 40. This flow is shown in figure 11 by arrows F9. The movement of the valve 20 relative to the tank 30 is shown in figure 11 by an arrow D3. This manual opening of the coolant supply duct is particularly advantageous, since it makes it possible to open the passage P2 in case of malfunction of the regulator 100.

In an alternative that is not shown, the reference pressure, considered relative to the atmospheric pressure, may be comprised between 0.1 and 1 bar, while the overpressure value, still considered relative to the atmospheric pressure, may be comprised between 0.8 and 3.5 bars, based on the configuration of the valve 20 and its component elements.

According to another alternative that is not shown, the neck 40 may include an abutment that is complementary with respect to an abutment formed on the stopper 38, thereby allowing the user to feel when the stopper 38 is completely screwed into the neck 40.

According to another alternative that is not shown, the valve 20 comprises a single refrigerant supply duct 201.

According to another alternative that is not shown, the valve 20 may be integrated into the cooling circuit of a power battery of an electric engine.

Furthermore, the technical features of the various alternatives described above may be combined with each other in whole or in part. Thus, the degassing assembly 2 and the valve 20 may be adapted in terms of cost, functionality and performance.

## Claims

1. A cooling circuit valve (20), suitable for being positioned on a degassing tank (30) intended to receive a refrigerant, in particular a coolant for a heat engine, said valve comprising:
- at least one first refrigerant supply duct (201),
- a second air intake duct (203) inside the valve,
- a third refrigerant and/or air exhaust duct (205), in particular an exhaust for coolant or a gas formed by vaporization of that coolant, and
- a connecting volume (V20) that is in communication with an inner volume (V30) of the degassing tank when the valve is positioned on the degassing tank,
- a flap (C1) selectively opening a passage (P1) for an incoming stream (F3) of air going from the second duct toward the connecting volume,
- a flap (C2) for selectively opening a passage (P3) for an outgoing stream (F8) of refrigerant and/or air, going from the connecting volume toward the third duct, and
- a regulator (100) which, under the effect of the pressure in the connecting volume (V20), selectively opens a passage (P2) of an incoming refrigerant stream (F1) going from the first duct (201) toward the connecting volume (V20),
wherein the regulator (100) comprises a membrane (206) that is elastically deformable under the effect of the pressure in the connecting volume (V20) and
**characterized**
**in that** the regulator (100) comprises a seat (202) and a housing (204) between which the membrane (206) is fixed by both of its edges (206D, 206E).

2. The valve (20) according to claim 1, **characterized in that** the membrane (206) comprises:
- a first part (206A) positioned across from the first duct (201) and which seals the first duct (201) when the regulator (100) is closed,
- a second part (206B) that partially delimits the connecting volume (V20), and
- a third part (206C) that connects the first part (206A) and the second part (206B) and which bears against the seat (202) when the regulator (100) is closed.

3. The valve (20) according to claim 2, **characterized in that** the second part (206B) of the membrane (206) is capable of lifting, under the effect of the pressure in the connecting volume (V20), the first (206A) and third (206C) parts of the membrane toward the housing (202), thereby opening the passage (P2) for the incoming refrigerant stream (F1) between the seat (202) and the membrane (206).

4. The valve (20) according to one of claims 2 and 3, **characterized in that** the regulator (100) comprises means (214, 212) for elastically loading the membrane (206), which include a calibration spring (214) and a blade (212) bearing on the third part (206C) of the membrane (206), the spring (214) being inserted between the blade (212) and the housing (204).

5. The valve (20) according to one of claims 2 to 4, **characterized in that** a contact surface (S206C) between the third part (206C) of the membrane (206) and the seat (202) is parallel to the incoming refrigerant stream (F1).

6. The valve according to any claim 2 to 5, **characterized in that** the third part (206C) of the membrane (206) includes ribs (206N1, 206N2) that bear against the seat (202) when the regulator is closed.

7. The valve according to claim 6, **characterized in that** the ribs (206N1, 206N2) have contact surfaces (S206N1, S206N2) with the seat (202) that are annular and concentric relative to a central axis (Z2) of the valve.

8. A degassing assembly (2) for a refrigerant, comprising a valve (20) and a degassing tank (30) intended to receive a refrigerant, **characterized in that** the valve (20) is according to one of claims 1 to 7 and is fixed in the upper part of the degassing tank (30) in a recess (O30) provided to that end.

9. A method for degassing a refrigerant inside a degassing tank (30), **characterized in that** the method uses a valve (20) according to any claim 1 to 7 and **in that** it comprises steps in which:
a) when a vacuum occurs in the connecting volume (V20), i.e., when the internal pressure of the tank (30) drops below the atmospheric pressure, air is suctioned into the second duct (203) and the flap (C1) opening the passage (P1) for the incoming stream (F3) of air opens,
b) when the pressure inside the tank (30) reaches atmospheric pressure, the flap (C1) opening the incoming air stream (F3) passage (P1) closes,
c) when the pressure of the tank reaches a reference value, which is greater than the atmospheric pressure, the opening regulator (100) of the passage (P2) for the incoming refrigerant stream (F1) opens, and
d) when the pressure in the tank reaches an overpressure value, which is greater than the reference value, the flap (C2) opening a passage (P3) for the outgoing stream (F8) opens, thereby allowing the refrigerant and/or air to escape.

## Patentansprüche

1. Kühlkreisventil (20), das geeignet ist, an einem Entgasungstank (30) angeordnet zu werden, der dazu vorgesehen ist, ein Kältemittel aufzunehmen, insbesondere ein Kühlmittel für eine Wärmekraftmaschine, wobei das Ventil Folgendes umfasst:
- mindestens eine erste Leitung für eine Kältemittelzufuhr (201),
- eine zweite Leitung für ein Luftansaugen (203) im Inneren des Ventils,
- eine dritte Leitung für einen Kältemittel- und/oder Luftausstoß (205), insbesondere einen Ausstoß für Kühlmittel oder ein Gas, das durch Verdampfung dieses Kühlmittels gebildet wird, und
- ein Verbindungsvolumen (V20), das in Verbindung mit einem Innenvolumen (V30) des Entgasungstanks steht, wenn das Ventil an dem Entgasungstank angeordnet ist,
- eine Klappe (C1), die selektiv einen Durchlass (P1) für einen eingehenden Strom (F3) von Luft öffnet, der von der zweiten Leitung hin zu dem Verbindungsvolumen geht,
- eine Klappe (C2) zum selektiven Öffnen eines Durchlasses (P3) für einen ausgehenden Strom (F8) von Kältemittel und/oder Luft, der von dem Verbindungsvolumen hin zu der dritten Leitung geht, und
- einen Regulator (100), der unter der Wirkung des Drucks in dem Verbindungsvolumen (V20) selektiv einen Durchlass (P2) eines eingehenden Kältemittelstroms (F1) öffnet, der von der ersten Leitung (201) hin zu dem Verbindungsvolumen (V20) geht,
wobei der Regulator (100) eine Membran (206) umfasst, die unter der Wirkung des Drucks in dem Verbindungsvolumen (V20) elastisch verformbar ist, und **dadurch gekennzeichnet,**
**dass** der Regulator (100) einen Sitz (202) und ein Gehäuse (204) umfasst, zwischen denen die Membran (206) an ihren beiden Rändern (206D, 206E) befestigt ist.

2. Ventil (20) nach Anspruch 1, **dadurch gekennzeichnet, dass** die Membran (206) Folgendes umfasst
- einen ersten Teil (206A), der gegenüber der ersten Leitung (201) angeordnet ist und der die erste Leitung (201) verschließt, wenn der Regulator (100) geschlossen ist,
- einen zweiten Teil (206B), der das Verbindungsvolumen (V20) teilweise umgrenzt, und
- einen dritten Teil (206C), der den ersten Teil (206A) und den zweiten Teil (206B) verbindet und der an dem Sitz (202) anliegt, wenn der Regulator (100) geschlossen ist.

3. Ventil (20) nach Anspruch 2, **dadurch gekennzeichnet, dass** der zweite Teil (206B) der Membran (206) in der Lage ist, unter der Wirkung des Drucks in dem Verbindungsvolumen (V20) den ersten (206A) und den dritten (206C) Teil der Membran hin zu dem Gehäuse (202) anzuheben und dadurch den Durchlass (P2) für den eingehenden Kältemittelstrom (F1) zwischen dem Sitz (202) und der Membran (206) zu öffnen.

4. Ventil (20) nach einem der Ansprüche 2 und 3, **dadurch gekennzeichnet, dass** der Regulator (100) Mittel (214, 212) zum elastischen Belasten der Membran (206) umfasst, die eine Kalibrierungsfeder (214) und ein Blatt (212) beinhalten, die auf dem dritten Teil (206C) der Membran (206) aufliegen, wobei die Feder (214) zwischen dem Blatt (212) und dem Gehäuse (204) eingesetzt ist.

5. Ventil (20) nach einem der Ansprüche 2 bis 4, **dadurch gekennzeichnet, dass** eine Kontaktoberfläche (S206C) zwischen dem dritten Teil (206C) der Membran (206) und dem Sitz (202) parallel zu dem eingehenden Kältemittelstrom (F1) ist.

6. Ventil nach einem der Ansprüche 2 bis 5, **dadurch gekennzeichnet, dass** der dritte Teil (206C) der Membran (206) Rippen (206N1, 206N2) beinhaltet, die an dem Sitz (202) anliegen, wenn der Regulator geschlossen ist.

7. Ventil nach Anspruch 6, **dadurch gekennzeichnet, dass** die Rippen (206N1, 206N2) Kontaktoberflächen (S206N1, S206N2) mit dem Sitz (202) aufweisen, die ringförmig und konzentrisch im Verhältnis zu einer Mittelachse (Z2) des Ventils sind.

8. Entgasungsanordnung (2) für ein Kältemittel, umfassend ein Ventil (20) und einen Entgasungstank (30), der dazu vorgesehen ist, ein Kältemittel aufzunehmen, **dadurch gekennzeichnet, dass** das Ventil (20) eines nach einem der Ansprüche 1 bis 7 ist und im oberen Teil des Entgasungstanks (30) in einer zu diesem Zweck bereitgestellten Vertiefung (O30) befestigt ist.

9. Verfahren zum Entgasen eines Kältemittels im Inneren eines Entgasungstanks (30), **dadurch gekennzeichnet, dass** das Verfahren ein Ventil (20) nach einem der Ansprüche 1 bis 7 verwendet und dass es Schritte umfasst, in denen:
a) wenn ein Vakuum in dem Verbindungsvolumen (V20) auftritt, d. h. wenn der Innendruck des Tanks (30) unter den atmosphärischen Druck fällt, Luft in die zweite Leitung (203) gesaugt wird und sich die Klappe (C1), die den Durchlass (P1) für den eingehenden Strom (F3) von Luft öffnet, öffnet,
b) wenn der Druck im Inneren des Tanks (30) den atmosphärischen Druck erreicht, sich die Klappe (C1), die den Durchlass (P1) für den eingehenden Luftstrom (F3) öffnet, schließt,
c) wenn der Druck des Tanks einen Referenzwert erreicht, der größer als der atmosphärische Druck ist, sich der Öffnungsregulator (100) des Durchlasses (P2) für den eingehenden Kältemittelstrom (F1) öffnet, und
d) wenn der Druck im Tank einen Überdruckwert erreicht, der größer als der Referenzwert ist, sich die Klappe (C2), die einen Durchlass (P3) für den ausgehenden Strom (F8) öffnet, öffnet und dadurch das Entweichen des Kältemittels und/oder von Luft gestattet.

## Revendications

1. Soupape de circuit de refroidissement (20), pouvant être positionnée sur un réservoir de dégazage (30) destiné à recevoir un fluide frigorigène, en particulier un fluide frigorigène pour un moteur thermique, ladite soupape comprenant :
au moins un premier conduit d'alimentation en fluide frigorigène (201),
un deuxième conduit d'admission d'air (203) à l'intérieur de la soupape,
un troisième conduit d'évacuation de fluide frigorigène et/ou d'air (205), en particulier un échappement pour fluide frigorigène ou un gaz formé par vaporisation de ce fluide frigorigène, et
un volume de raccordement (V20) qui est en communication avec un volume intérieur (V30) du réservoir de dégazage lorsque la soupape est positionnée sur le réservoir de dégazage,
un clapet (C1) ouvrant sélectivement un passage (P1) pour un flux entrant (F3) d'air allant du second conduit vers le volume de raccordement,
un clapet (C2) pour ouvrir sélectivement un passage (P3) pour un flux sortant (F8) de fluide frigorigène et/ou d'air, allant du volume de raccordement vers le troisième conduit, et
un régulateur (100) qui, sous l'effet de la pression dans le volume de raccordement (V20), ouvre sélectivement un passage (P2) d'un flux de fluide frigorigène entrant (F1) allant du premier conduit (201) vers le volume de raccordement (V20),
le régulateur (100) comprenant une membrane (206) qui est élastiquement déformable sous l'effet de la pression dans le volume de raccordement (V20) et
**caractérisée en ce que** le régulateur (100) comprend un siège (202) et un logement (204) entre lesquels la membrane (206) est fixée par ses deux bords (206D, 206E).

2. Soupape (20) selon la revendication 1, **caractérisée en ce que** la membrane (206) comprend :
une première partie (206A) positionnée en face du premier conduit (201) et qui scelle le premier conduit (201) lorsque le régulateur (100) est fermé,
une deuxième partie (206B) qui délimite partiellement le volume de raccordement (V20), et
une troisième partie (206C) qui relie la première partie (206A) et la deuxième partie (206B) et qui repose contre le siège (202) lorsque le régulateur (100) est fermé.

3. Soupape (20) selon la revendication 2, **caractérisée en ce que** la deuxième partie (206B) de la membrane (206) peut soulever, sous l'effet de la pression dans le volume de raccordement (V20), les première (206A) et troisième (206C) parties de la membrane vers le boîtier (202), ouvrant ainsi le passage (P2) pour le flux de fluide frigorigène entrant (F1) entre le siège (202) et la membrane (206).

4. Soupape (20) selon la revendication 2 ou 3, **caractérisée en ce que** le régulateur (100) comprend un moyen (214, 212) pour charger élastiquement la membrane (206), qui comprend un ressort d'étalonnage (214) et une lame (212) reposant sur la troisième partie (206C) de la membrane (206), le ressort (214) étant inséré entre la lame (212) et le boîtier (204).

5. Soupape (20) selon l'une des revendications 2 à 4, **caractérisée en ce qu'**une surface de contact (S206C) entre la troisième partie (206C) de la membrane (206) et le siège (202) est parallèle au flux de fluide frigorigène entrant (F1).

6. Soupape selon l'une quelconque des revendications 2 à 5, **caractérisée en ce que** la troisième partie (206C) de la membrane (206) comprend des nervures (206N1, 206N2) qui reposent contre le siège (202) lorsque le régulateur est fermé.

7. Soupape selon la revendication 6, **caractérisée en ce que** les nervures (206N1, 206N2) ont des surfaces de contact (S206N1, S206N2) avec le siège (202) qui sont annulaires et concentriques par rapport à un axe central (Z2) de la soupape.

8. Ensemble de dégazage (2) pour un fluide frigorigène, comprenant une soupape (20) et un réservoir de dégazage (30) destiné à recevoir un fluide frigorigène, **caractérisé en ce que** la soupape (20) est selon l'une des revendications 1 à 7 et est fixée dans la partie supérieure du réservoir de dégazage (30) dans un évidement (O30) fourni à cette extrémité.

9. Procédé de dégazage d'un fluide frigorigène à l'intérieur d'un réservoir de dégazage (30), **caractérisé en ce que** le procédé utilise une soupape (20) selon l'une quelconque des revendications 1 à 7 et **en ce qu'**il comprend des étapes selon lesquelles :
a) lorsqu'un vide se produit dans le volume de raccordement (V20), c'est-à-dire lorsque la pression interne du réservoir (30) descend en dessous de la pression atmosphérique, de l'air est aspiré dans le deuxième conduit (203) et le clapet (C1) ouvrant le passage (P1) pour le flux entrant (F3) d'air s'ouvre,
b) lorsque la pression à l'intérieur du réservoir (30) atteint la pression atmosphérique, le clapet (C1) ouvrant le passage (P1) de flux d'air entrant (F3) se ferme,
c) lorsque la pression du réservoir atteint une valeur de référence, qui est supérieure à la pression atmosphérique, le régulateur d'ouverture (100) du passage (P2) pour le flux de fluide frigorigène entrant (F1) s'ouvre, et
d) lorsque la pression dans le réservoir atteint une valeur de surpression, qui est supérieure à la valeur de référence, le clapet (C2) ouvrant un passage (P3) pour le flux sortant (F8) s'ouvre, permettant ainsi au fluide frigorigène et/ou à l'air de sortir.
